# FASCICULE DE BREVET EUROPEEN

(11) **EP 3 181 998 B1**
(45) Date de publication et mention de la délivrance du brevet: **07.08.2024**
(21) Numéro de dépôt: 15199765.7
(22) Date de dépôt: 14.12.2015
(51) Int. Cl.: F21V 8/00, G04G 9/00, G04G 17/04

(54) **GUIDE DE LUMIERE POUR L'ECLAIRAGE D'UN DISPOSITIF D'AFFICHAGE**
LICHTWELLENLEITER ZUR BELEUCHTUNG EINER ANZEIGEVORRICHTUNG
LIGHT GUIDE FOR THE ILLUMINATION OF A DISPLAY DEVICE

(43) Date de publication de la demande: 21.06.2017
(73) Titulaire: ETA SA Manufacture Horlogère Suisse, 2540 Grenchen (CH)
(72) Inventeur: MEYER, Vincent, 2504 Biel/Bienne (CH); PARASCHIVESCU, Daniel, 2540 Grenchen (CH); CANONICA, Michael, 2072 St-Blaise (CH); CORREA, David, 2560 Nidau (CH); LACONTE, Jean, 2013 Colombier (CH); GILLER, Ludovic, 1763 Granges-Paccot (CH)
(74) Mandataire: Supper, Marc

(56) Documents cités:
- CN-A- 102 062 972
- DE-U1- 202015 005 982
- US-A- 5 957 561
- US-A1- 2005 185 389
- US-A1- 2011 255 023
- US-A1- 2013 063 978
- US-A1- 2013 176 317
- US-A1- 2014 119 044

## Description

### Domaine technique de l'invention

La présente invention concerne un guide de lumière pour l'éclairage d'un dispositif d'affichage dans une pièce d'horlogerie. En particulier, la présente invention concerne un tel guide de lumière utilisé pour l'éclairage d'un dispositif d'affichage à cristal liquide.

### Arrière-plan technologique de l'invention

Les informations affichées par un dispositif d'affichage tel qu'une cellule d'affichage à cristal liquide sont difficiles à lire dans des conditions de faible luminosité. C'est pourquoi il a été très tôt envisagé d'éclairer de tels dispositifs d'affichage au moyen d'une source de lumière. Les solutions connues les plus rudimentaires consistent simplement à disposer une source de lumière ponctuelle telle qu'une ampoule à filament ou une diode électroluminescente à l'arrière du dispositif d'affichage à cristal liquide. De telles solutions ne sont cependant pas satisfaisantes car elles ne permettent pas d'assurer un éclairage homogène de la surface d'affichage du dispositif d'affichage à cristal liquide. En effet, un halo de lumière plus intense est perceptible par l'utilisateur à travers le dispositif d'affichage à cristal liquide à l'endroit où est implantée la source de lumière ponctuelle.

Pour remédier à ce problème, il a été proposé d'éclairer les dispositifs d'affichage à cristaux liquides au moyen d'un guide de lumière. Un guide de lumière est un composant d'épaisseur limitée réalisé en un matériau transparent, typiquement un matériau plastique, dont les dimensions correspondent sensiblement à celles du dispositif d'affichage à cristal liquide à éclairer et dans lequel est injectée la lumière produite par au moins une source de lumière optiquement couplée avec le guide de lumière. Des microstructures optiques appelées extracteurs de lumière dont la fonction est d'extraire de manière uniforme sur l'ensemble de la surface du guide de lumière la lumière injectée dans le guide de lumière par la source de lumière sont structurées dans l'une au moins des surfaces supérieure ou inférieure du guide de lumière.

Un exemple d'un guide de lumière transparent du genre brièvement décrit ci-dessus est représenté sur la figure 1 annexée à la présente demande de brevet. Désigné dans son ensemble par la référence numérique générale 1, le guide de lumière est par exemple de forme générale parallélépipédique et comprend une surface supérieure 2 et une surface inférieure 4 reliées entre elles par un bord latéral 6. Il comprend également un ou plusieurs trous 8 pour son montage sur une pièce support (non représentée) ainsi qu'une paire de tenons 10 pour la fixation d'une feuille de circuit imprimé 12 servant de support à une source de lumière ponctuelle 14 telle qu'une diode électroluminescente.

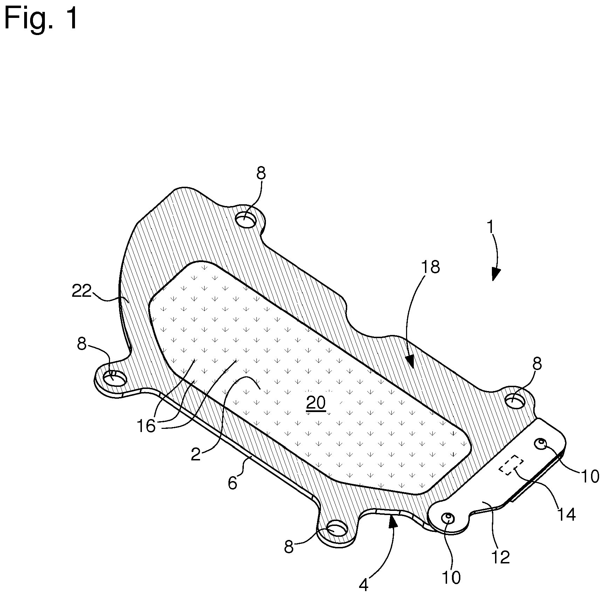

Réalisé en un matériau plastique transparent, le guide de lumière 1 comprend des prismes optiques 16 communément appelés extracteurs de lumière qui, dans l'exemple représenté à la figure 1, sont structurés dans la surface supérieure 2 du guide de lumière 1. Ces extracteurs de lumière 16 ont pour but d'extraire vers le haut la lumière injectée dans le guide de lumière 1 par la source de lumière ponctuelle 14 optiquement couplée avec le guide de lumière 1. Un tel guide de lumière 1 est donc destiné à éclairer par le dessous un dispositif d'affichage tel qu'une cellule d'affichage à cristal liquide (non représentée).

Afin que l'éclairage du dispositif d'affichage soit aussi lumineux et aussi homogène que possible, il faut donc éviter au maximum les fuites de lumière. On a en effet observé que, dans le cas particulier où l'on utilise un guide de lumière pour éclairer par le dessous un dispositif d'affichage à cristal liquide logé dans une boîte de montre, la lumière qui fuit par les côtés du guide de lumière peut se réfléchir sur certains composants de la montre et être diffusée vers le haut en direction du cadran de la montre. Il apparaît ainsi des taches de lumière parasites qui nuisent à l'aspect esthétique de la montre.

Pour résoudre ce problème, la surface supérieure 2 du guide de lumière 1 est scindée en une surface périphérique 18 et en une surface utile 20 correspondant sensiblement à la surface du dispositif d'affichage à éclairer et qui est entourée par la surface périphérique 18. Comme représenté à la figure 1, la surface périphérique 18 est recouverte d'une couche 22 d'un matériau absorbant la lumière tel qu'une peinture noire, ceci afin d'éviter que la lumière produite par la source de lumière 14 ne fuie à cet endroit-là. De même, les tenons 10 pour la fixation de la feuille de circuit imprimé 12 qui sert de support à la source de lumière ponctuelle 14 viennent de matière avec le guide de lumière 1 et sont donc transparents. Il convient donc de les recouvrir également de peinture absorbante. Enfin, toujours dans le but de limiter autant que possible les fuites de lumière, le bord latéral 6 peut être chanfreiné. En effet, comme il est difficile de déposer de la peinture absorbante sur le bord latéral 6 du guide de lumière 1, on chanfreine celui-ci. On comprend en effet qu'en chanfreinant le bord latéral 6, on réduit la surface par laquelle la lumière serait susceptible de fuir latéralement.

Les opérations visant à réduire les fuites de lumière dans un guide de lumière du type décrit ci-dessus sont cependant difficiles à mettre en oeuvre à une échelle industrielle. La couche 22 de matériau absorbant est typiquement déposée par tampographie, ce qui s'avère long et complexe en particulier car il faut s'assurer que le guide de lumière 1 soit précisément positionné lorsque l'on dépose la couche 22 de matériau absorbant. En effet, il faut veiller à ne pas déposer de peinture absorbante sur la surface utile 20 du guide de lumière 1 par laquelle s'échappe la lumière destinée à éclairer le dispositif d'affichage. D'autre part, le chanfreinage du bord latéral 6 ne permet pas d'éviter complètement les fuites de lumière.

Le document US 2013/063978 A1 décrit un dispositif de rétroéclairage qui comprend un bâti qui reçoit une plaque guide de lumière réalisée en un matériau transparent tel que du verre ou un matériau plastique. Cette plaque guide de lumière est reçue dans l'ouverture d'un châssis qui est formé d'un matériau absorbant et d'un matériau réfléchissant qui sont injectés dans l'intervalle qui existe entre la surface latérale intérieure du bâti et la paroi périphérique de la plaque guide de lumière. La couche de matériau absorbant est disposée autour de la plaque guide de lumière avec interposition d'une couche de matériau réfléchissant. La couche de matériau absorbant n'est pas en contact direct avec la plaque guide de lumière. Ce document ne fournit aucun enseignement sur la façon d'utiliser le matériau absorbant pour monter le guide de lumière à l'intérieur d'une boîte de montre.

Le document DE 20 2015 005982 U1 concerne un guide de lumière comprenant un ensemble de trous pour son montage à l'intérieur d'une boîte de montre.

### Résumé de l'invention

La présente invention a pour but de remédier aux inconvénients mentionnés ci-dessus ainsi qu'à d'autres encore en procurant un guide de lumière pour l'éclairage d'un dispositif d'affichage dans une pièce d'horlogerie plus simple à réaliser industriellement et permettant de s'affranchir des problèmes de fuites de lumière.

A cet effet, la présente invention concerne un guide de lumière pour l'éclairage d'un dispositif d'affichage dans une pièce d'horlogerie tel que défini par les revendications 1 et 2.

Selon une caractéristique complémentaire de l'invention, la partie centrale du guide de lumière comprend une surface supérieure et une surface inférieure qui s'étendent à distance constante l'une de l'autre, les surfaces supérieure et inférieure étant reliées entre elles par un bord latéral, des extracteurs de lumière étant structurés dans l'une au moins des surfaces supérieure ou inférieure.

Grâce à ces caractéristiques, la présente invention procure un guide de lumière dans lequel les fuites de lumière sont éliminées. En effet, comme la partie centrale transparente du guide de lumière qui sert à extraire la lumière injectée dans le guide de lumière par la source de lumière est entourée par une partie périphérique réalisée au moyen d'un matériau absorbant la lumière dans la masse, la lumière ne peut s'échapper latéralement du guide de lumière. L'illumination du dispositif d'affichage destiné à être éclairé au moyen du guide de lumière selon l'invention est donc plus intense et plus homogène que dans le cas des guides de lumière de l'art antérieur. Par ailleurs, comme tous les éléments du guide de lumière (partie périphérique du guide de lumière, trous pour le montage du guide de lumière, tenons pour la fixation de la feuille de circuit imprimé) sont réalisés d'un seul tenant à l'aide d'un matériau absorbant la lumière dans la masse, les opérations de tampographie sont évitées, ce qui permet de réaliser des économies substantielles en termes de temps et de coûts de fabrication.

### Brève description des figures

D'autres caractéristiques et avantages de la présente invention ressortiront plus clairement de la description détaillée qui suit d'un exemple de réalisation d'un guide de lumière selon l'invention, cet exemple étant donné à titre purement illustratif et non limitatif seulement en liaison avec le dessin annexé sur lequel :
- la figure 1, déjà citée, est une vue en perspective d'un guide de lumière selon l'art antérieur ;
- la figure 2 est une vue en perspective et à l'état dissocié d'un premier mode de réalisation d'un guide de lumière selon l'invention ;
- la figure 3 est une vue en perspective à l'état assemblé du guide de lumière de la figure 2 ;
- la figure 4 est une vue de dessous du guide de lumière de la figure 3 ;
- la figure 5 est une vue en perspective et en éclaté d'un deuxième mode de réalisation d'un guide de lumière selon l'invention dans lequel une pièce support est munie de tenons de fixation que l'on vient écraser thermiquement pour maintenir le guide de lumière, et
- la figure 6 est une vue en perspective et en éclaté d'un troisième mode de réalisation d'un guide de lumière selon l'invention dans lequel la partie périphérique du guide de lumière délimite une cavité pour recevoir la partie centrale.

### Description détaillée d'un mode de réalisation de l'invention

La présente invention procède de l'idée générale inventive qui consiste à réaliser un guide de lumière pour l'éclairage d'un dispositif d'affichage en deux éléments, à savoir un premier élément central réalisé en un matériau transparent par lequel sort la lumière injectée dans le guide de lumière, et un second élément périphérique réalisé en un matériau absorbant la lumière dans la masse qui entoure l'élément central et qui porte les moyens pour le montage du guide de lumière sur un élément support ainsi que les moyens pour la fixation d'une feuille de circuit imprimé portant une source de lumière. La présence de cet élément périphérique absorbant la lumière autour de l'élément central transparent d'où s'extrait la lumière permet d'éviter toute fuite de lumière par les côtés du guide de lumière et de s'affranchir des opérations de peinture de l'art antérieur qui sont longues et coûteuses.

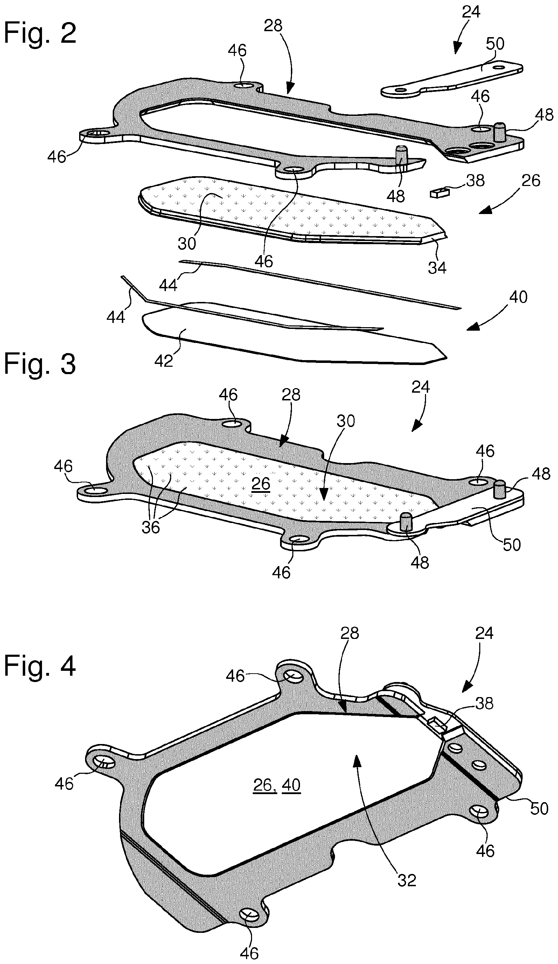

Un exemple d'un guide de lumière conforme à la présente invention est représenté en perspective et en éclaté à la figure 2 annexée à la présente demande de brevet. Désigné dans son ensemble par la référence numérique générale 24, le guide de lumière est à titre d'exemple nullement limitatif de forme générale parallélépipédique et comprend une partie centrale transparente 26 et une partie périphérique opaque 28 réalisée dans un matériau absorbant la lumière et entourant la partie centrale, la partie périphérique opaque 28 étant solidaire de la partie centrale transparente 26. Dans le cas où les parties centrale transparente 26 et périphérique opaque 28 sont réalisées en un matériau plastique, elles peuvent être rendues solidaires l'une de l'autre par exemple par collage ou par thermo-soudage.

La partie centrale transparente 26 du guide de lumière 24 comprend une surface supérieure 30 et une surface inférieure 32 qui s'étendent à distance constante l'une de l'autre, les surfaces supérieure 30 et inférieure 32 étant reliées entre elles par un bord latéral 34. Dans l'exemple représenté au dessin, les surfaces supérieure 30 et inférieure 32 sont planes et s'étendent parallèlement l'une à l'autre. Il va de soi que selon un mode de réalisation non illustré au dessin, les surfaces supérieure 30 et inférieure 32 pourraient être courbes et être séparées d'une distance constante l'une de l'autre pour s'adapter à un dispositif d'affichage de même profil.

Le guide de lumière 24 selon l'invention est destiné à éclairer un dispositif d'affichage (non représenté) par le dessous. A cet effet, une pluralité d'extracteurs de lumière 36 structurés dans la surface supérieure 30 ont pour but d'extraire vers le haut la lumière injectée dans le guide de lumière 24 par une source de lumière 38 telle qu'une diode électroluminescente optiquement couplée avec le guide de lumière 24. On comprendra bien entendu que cet exemple de réalisation est donné à titre purement illustratif seulement et que des extracteurs de lumière peuvent être structurés dans l'une et/ou l'autre des surfaces supérieure 30 et inférieure 32 du guide de lumière 24. En particulier, des extracteurs de lumière 36 sont structurés dans la surface inférieure 32 de la partie centrale 26 du guide de lumière 24 dans le cas où ce dernier est utilisé pour éclairer un dispositif d'affichage par le dessus.

Selon une caractéristique complémentaire de l'invention, la surface de la partie centrale 26 du guide de lumière 24 qui est opposée à la surface de la partie centrale 26 du guide de lumière 24 par laquelle la lumière produite par la source de lumière 38 s'échappe est munie d'une couche réfléchissante 40. Cette couche réfléchissante 40 peut être directement structurée sur la surface de la partie centrale 26 du guide de lumière 24 opposée à la surface par laquelle la lumière s'échappe, ou bien être formée par exemple par un film 42 fixé sur la surface de la partie centrale 26 du guide de lumière 24 au moyen d'une ou de deux portions 44 de ruban adhésif sur ses deux faces.

Selon l'invention, la partie périphérique opaque 28 comprend un ou plusieurs trous 46 pour le montage du guide de lumière 24 sur une pièce support (non représentée) ainsi qu'au moins un tenon 48 (deux dans l'exemple représenté) pour la fixation d'une feuille de circuit imprimé 50 servant de support à la source de lumière 38.

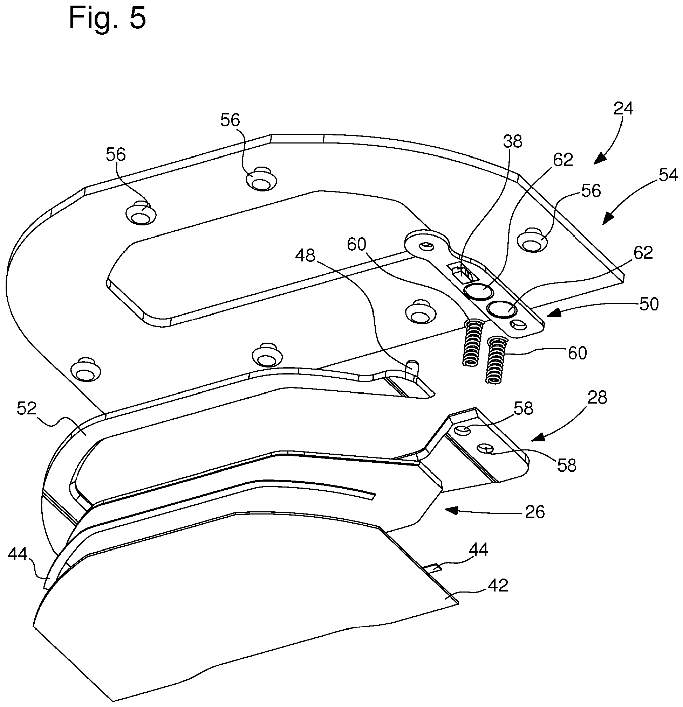

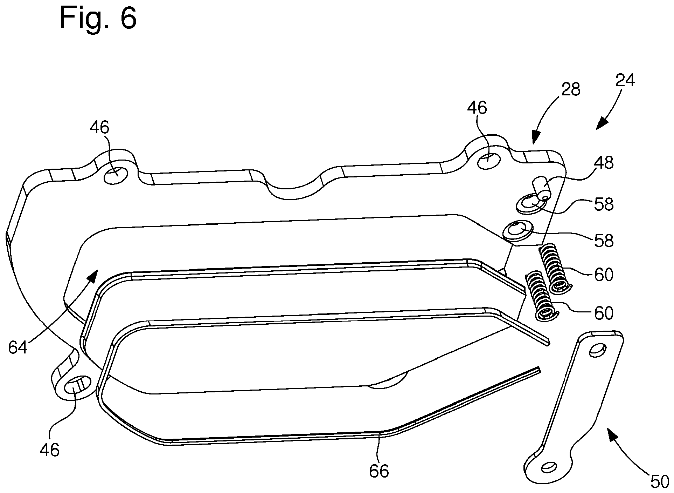

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, comme représenté à la figure 5, la partie périphérique 28 du guide de lumière 24 présente un bord extérieur 52 par lequel le guide de lumière 24 est fixé sur une pièce support 54, par exemple une platine ou un pont d'un mouvement d'horlogerie, qui est munie d'un ou de plusieurs tenons de fixation 56 aptes à être déformés thermiquement pour maintenir le guide de lumière 24 contre la pièce support 54 par le bord extérieur 52 de sa partie périphérique 28. La partie périphérique 28 du guide de lumière 24 est percée de deux trous 58 pour le passage de deux ressorts de contact 60 qui prennent appui sur deux plages de contact 62 de la feuille de circuit imprimé 50 pour relier électriquement la source de lumière 38 à une source d'alimentation électrique (non illustrée). Selon encore une autre variante de réalisation de l'invention illustrée à la figure 6, la partie périphérique 28 du guide de lumière 24 délimite une cavité 64 dans laquelle est reçue la partie centrale 26 du guide de lumière 24, avec si nécessaire interposition d'une couche réfléchissante entre la partie centrale 26 et le fond de la cavité 58. Un joint adhésif 66 disposé sur le pourtour de la partie centrale 26 permet de solidariser cette dernière avec la partie périphérique 28 du guide de lumière 24

### Nomenclature

Guide de lumière 1
Surface supérieure 2
Surface inférieure 4
Bord latéral 6
Trous 8
Tenons 10
Feuille de circuit imprimé 12
Source de lumière ponctuelle 14
Prismes optiques 16
Surface périphérique 18
Surface utile 20
Couche 22
Guide de lumière 24
Partie centrale transparente 26
Partie périphérique opaque 28
Surface supérieure 30
Surface inférieure 32
Bord latéral 34
Extracteurs de lumière 36
Source de lumière 38
Couche réfléchissante 40
Film 42
Portions de ruban adhésif 44
Trous 46
Tenon 48
Feuille de circuit imprimé 50
Bord extérieur 52
Pièce support 54
Tenons de fixation 56
Trous 58
Ressorts de contact 60
Plages de contact 62
Cavité 64

## Revendications

1. Guide de lumière pour l'éclairage d'un dispositif d'affichage dans une pièce d'horlogerie dans lequel est injectée la lumière produite par une source de lumière (38) optiquement couplée avec le guide de lumière (24), le guide de lumière (24) comprenant une première partie centrale (26) réalisée dans un matériau transparent dans laquelle sont structurés des extracteurs de lumière (36) grâce auxquels la lumière produite par la source de lumière (38) est extraite du guide de lumière, **caractérisé en ce que** le guide de lumière comprend une seconde partie périphérique (28) réalisée dans un matériau absorbant la lumière dans la masse et entourant la partie centrale (26), la partie périphérique (28) étant solidaire de la partie centrale (26) par un ruban adhésif (44) ou par un joint adhésif (66), la partie périphérique (28) présentant localement une interruption dans laquelle est agencée la source de lumière (38), la partie périphérique (28) comprenant un ou plusieurs trous (46) pour le montage du guide de lumière (24) sur une pièce support ainsi qu'au moins un tenon (42) pour la fixation d'une feuille de circuit imprimé (44) servant de support à la source de lumière (38).

2. Guide de lumière pour l'éclairage d'un dispositif d'affichage dans une pièce d'horlogerie dans lequel est injectée la lumière produite par une source de lumière (38) optiquement couplée avec le guide de lumière (24), le guide de lumière (24) comprenant une première partie centrale (26) réalisée dans un matériau transparent dans laquelle sont structurés des extracteurs de lumière (36) grâce auxquels la lumière produite par la source de lumière (38) est extraite du guide de lumière, **caractérisé en ce que** le guide de lumière comprend une seconde partie périphérique (28) réalisée dans un matériau absorbant la lumière dans la masse et entourant la partie centrale (26), la partie périphérique (28) étant solidaire de la partie centrale (26) par un ruban adhésif (44) ou par un joint adhésif (66), la partie périphérique (28) présentant localement une interruption dans laquelle est agencée la source de lumière (38), la partie périphérique (28) du guide de lumière (24) présentant un bord extérieur par lequel le guide de lumière (24) est fixé sur une pièce support qui est munie d'au moins un tenon de fixation déformé thermiquement pour maintenir le guide de lumière (24) contre la pièce support par le bord extérieur de sa partie périphérique (28).

3. Guide de lumière selon l'une des revendications 1 et 2, **caractérisé en ce que** la partie centrale (26) du guide de lumière (24) comprend une surface supérieure (30) et une surface inférieure (32) qui s'étendent à distance constante l'une de l'autre, les surfaces supérieure (30) et inférieure (32) étant reliées entre elles par un bord latéral (34), des extracteurs de lumière (36) étant structurés dans l'une au moins des surfaces supérieure (30) ou inférieure (32).

4. Guide de lumière selon l'une quelconque des revendications 1 à 3, **caractérisé en ce que** la partie périphérique (28) du guide de lumière (24) délimite une cavité (64) dans laquelle est reçue la partie centrale (26) du guide de lumière (24).

5. Guide de lumière selon l'une quelconque des revendications 1 à 4, **caractérisé en ce que** la surface de la partie centrale (26) du guide de lumière (24) qui est opposée à la surface de la partie centrale (26) du guide de lumière (24) par laquelle la lumière produite par la source de lumière (38) s'échappe est munie d'une couche réfléchissante (40).

## Patentansprüche

1. Lichtleiter zur Beleuchtung einer Anzeigevorrichtung in einem Uhrmachereistück, in welche das von einer Lichtquelle (38) erzeugte Licht eingespeist wird, die optisch mit dem Lichtleiter (24) gekoppelt ist, wobei der Lichtleiter (24) einen ersten Mittelteil (26) umfasst, der aus einem transparenten Werkstoff hergestellt ist, in dem Lichtauswerfer (36) strukturiert sind, dank derer das von der Lichtquelle (38) erzeugte Licht aus dem Lichtleiter ausgeworfen wird, **dadurch gekennzeichnet, dass** der Lichtleiter einen zweiten Peripherieteil (28) umfasst, der aus einem Werkstoff hergestellt ist, der das Licht in der Masse absorbiert, und den Mittelteil (26) umgibt, wobei der Peripherieteil (28) durch ein Klebeband (44) oder durch eine Klebeverbindung (66) fest mit dem Mittelteil (26) verbunden ist, wobei der Peripherieteil (28) lokal eine Unterbrechung aufweist, in der die Lichtquelle (38) angeordnet ist, wobei der Peripherieteil (28) ein oder mehrere Löcher (46) zur Montage des Lichtleiters (24) an einem Stützstück, sowie mindestens einen Dübel (42) zur Befestigung einer Schaltungsblatts (44) umfasst, das als Stütze für die Lichtquelle (38) dient.

2. Lichtleiter zur Beleuchtung einer Anzeigevorrichtung in einem Uhrmachereistück, in welche das von einer Lichtquelle (38) erzeugte Licht eingespeist wird, die optisch mit dem Lichtleiter (24) gekoppelt ist, wobei der Lichtleiter (24) einen ersten Mittelteil (26) umfasst, der aus einem transparenten Werkstoff hergestellt ist, in dem Lichtauswerfer (36) strukturiert sind, dank derer das von der Lichtquelle (38) erzeugte Licht aus dem Lichtleiter ausgeworfen wird, **dadurch gekennzeichnet, dass** der Lichtleiter einen zweiten Peripherieteil (28) umfasst, der aus einem Werkstoff hergestellt ist, der das Licht in der Masse absorbiert, und den Mittelteil (26) umgibt, wobei der Peripherieteil (28) durch ein Klebeband (44) oder durch eine Klebeverbindung (66) fest mit dem Mittelteil (26) verbunden ist, wobei der Peripherieteil (28) lokal eine Unterbrechung aufweist, in der die Lichtquelle (38) angeordnet ist, wobei der Peripherieteil (28) des Lichtleiters (24) einen äußeren Rand aufweist, über den der Lichtleiter (24) an einem Stützstück befestigt ist, das mit mindestens einem thermisch verformten Befestigungsdübel versehen ist, um den Lichtleiter (24) über den äußeren Rand seines Peripherieteils (28) am Stützstück zu halten.

3. Lichtleiter nach einem der Ansprüche 1 und 2, **dadurch gekennzeichnet, dass** der Mittelteil (26) des Lichtleiters (24) eine obere Oberfläche (30) und eine untere Oberfläche (32) umfasst, die sich in einem konstanten Abstand voneinander erstrecken, wobei die obere (30) und untere (32) Oberfläche durch einen seitlichen Rand (34) miteinander verbunden sind, wobei Lichtauswerfer (36) in mindestens einer von der oberen (30) oder unteren (32) Oberfläche strukturiert sind.

4. Lichtleiter nach einem der Ansprüche 1 bis 3, **dadurch gekennzeichnet, dass** der Peripherieteil (28) des Lichtleiters (24) einen Hohlraum (64) begrenzt, in dem der Mittelteil (26) des Lichtleiters (24) aufgenommen ist.

5. Lichtleiter nach einem der Ansprüche 1 bis 4, **dadurch gekennzeichnet, dass** die Oberfläche des Mittelteils (26) des Lichtleiters (24), die der Oberfläche des Mittelteils (26) des Lichtleiters (24) gegenüberliegt, durch die das von der Lichtquelle (38) erzeugte Licht austritt, mit einer reflektierenden Schicht (40) versehen ist.

## Claims

1. Light guide for illuminating a display device in a timepiece into which light produced by a light source (38) optically coupled with the light guide (24) is injected, the light guide (24) comprising a first central part (26) made of a transparent material in which light extractors (36) are patterned, by means of which light extractors the light produced by the light source (38) is extracted from the light guide, **characterised in that** the light guide comprises a second peripheral part (28) made of a light-absorbing material and surrounding the central part (26), the peripheral part (28) being rigidly connected to the central part (26) by an adhesive tape (44) or by an adhesive seal (66), the peripheral part (28) locally having a gap in which the light source (38) is arranged, the peripheral part (28) comprising one or more holes (46) for mounting the light guide (24) on a support part and at least one pin (42) for fastening a printed circuit sheet (44) used to support the light source (38).

2. Light guide for illuminating a display device in a timepiece into which light produced by a light source (38) optically coupled with the light guide (24) is injected, the light guide (24) comprising a first central part (26) made of a transparent material in which light extractors (36) are patterned, by means of which light extractors the light produced by the light source (38) is extracted from the light guide, **characterised in that** the light guide comprises a second peripheral part (28) made of a light-absorbing material and surrounding the central part (26), the peripheral part (28) being rigidly connected to the central part (26) by an adhesive tape (44) or by an adhesive seal (66), the peripheral part (28) locally having a gap in which the light source (38) is arranged, the peripheral part (28) of the light guide (24) having an outer edge by means of which the light guide (24) is fastened to a support part which is provided with at least one thermally deformed fastening pin for holding the light guide (24) against the support part by the outer edge of its peripheral part (28).

3. Light guide according to one of claims 1 and 2, **characterised in that** the central part (26) of the light guide (24) comprises an upper surface (30) and a lower surface (32) which extend at a constant distance from one another, the upper surface (30) and lower surface (32) being connected to one another by a lateral edge (34), light extractors (36) being patterned in at least one of either the upper surface (30) or the lower surface (32).

4. Light guide according to any one of claims 1 to 3, **characterised in that** the peripheral part (28) of the light guide (24) defines a cavity (64) in which the central part (26) of the light guide (24) is received.

5. Light guide according to any one of claims 1 to 4, **characterised in that** the surface of the central part (26) of the light guide (24) which is opposite the surface of the central part (26) of the light guide (24) through which the light produced by the light source (38) escapes is provided with a reflective layer (40).
